# EUROPÄISCHE PATENTSCHRIFT

(11) **EP 3 772 576 B1**
(45) Veröffentlichungstag und Bekanntmachung des Hinweises auf die Patenterteilung: **17.01.2024**
(21) Anmeldenummer: 20189326.0
(22) Anmeldetag: 04.08.2020
(51) Int. Cl.: F01N 13/00, F01N 3/035, F01N 3/025, F01N 3/20, F01N 9/00, F01N 3/10

(54) **VERFAHREN ZUM AUFHEIZEN EINES KATALYSATORS UND ABGASNACHBEHANDLUNGSSYSTEM**
METHOD OF HEATING A CATALYST AND EXHAUST GAS AFTER-TREATMENT SYSTEM
PROCEDE DE CHAUFFAGE D'UN CATALYSEUR ET SYSTEME DE POST-TRAITEMENT DES GAZ D'ECHAPPEMENT

(30) Priorität: 08.08.2019 DE 102019121428
(43) Veröffentlichungstag der Anmeldung: 10.02.2021
(73) Patentinhaber: VOLKSWAGEN AG, 38440 Wolfsburg (DE)
(72) Erfinder: Baron von Ceumern-Lindenstjerna, Falk-Christian, 38124 Braunschweig (DE); Paukner, Stefan, 38442 Wolfsburg (DE); Kaack, Michael, 38531 Rötgesbüttel (DE)
(74) Vertreter: Gulde & Partner

(56) Entgegenhaltungen:
- WO-A1-2019/030315
- DE-A1-102008 032 601
- DE-A1-102012 021 573
- DE-A1-102017 113 366
- DE-A1-102018 100 240
- DE-A1-102019 102 928

## Beschreibung

Die Erfindung betrifft ein Verfahren zum Aufheizen eines Katalysators in einem Abgasnachbehandlungssystem sowie ein Abgasnachbehandlungssystem mit einem Katalysator gemäß dem Oberbegriff der unabhängigen Patentansprüche.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Um die nicht vollständig vermeidbaren Rohemissionen effektiv nachmotorisch umsetzen zu können, werden in der Abgasanlage des Verbrennungsmotors mit Edelmetall beschichtete Katalysatoren verbaut. Damit diese Katalysatoren die Schadstoffe umsetzen können, ist ein minimales Temperaturniveau des Abgases und des Katalysators notwendig. Um den Katalysator nach einem Kaltstart des Verbrennungsmotors möglichst schnell auf eine Betriebstemperatur zu bringen, werden motorische Heizmaßnahmen wie eine Verstellung des Zündwinkels oder der Kraftstoffeinspritzung in Richtung "spät" oder ein unterstöchiometrischer Betrieb des Verbrennungsmotors unter gleichzeitiger Einbringung von Sekundärluft genutzt. Um noch mehr Wärmeenergie gezielt in die Abgasanlage einzubringen, ist es möglich, den Katalysator elektrisch zu beheizen oder an der Abgasanlage einen zuschaltbaren Abgasbrenner zu installieren, um heißes Abgas in die Abgasanlage einzuleiten und die in der Abgasanlage angeordneten Abgasnachbehandlungskomponenten unabhängig vom Verbrennungsmotor zu erwärmen. Dadurch können die Emissionen bereits in der Heizphase des Katalysators deutlich reduziert werden.

In einer Unterbodenlage eines Kraftfahrzeuges steht in der Regel relativ viel Bauraum zur Verfügung, sodass großvolumige Katalysatoren in dieser Position angeordnet werden können, welche bei durchwärmter Abgasanlage ein hohes katalytisch wirksames Volumen zur Verfügung stellen können. Nachteilig an der Anordnung eines Katalysators in der Unterbodenposition ist jedoch, dass aufgrund der langen Abgaslauflänge zwischen dem Auslass des Verbrennungsmotors und der Wärmeverluste über die Wände des Abgaskanals vergleichsweise viel Zeit vergeht, bis ein Katalysator in Unterbodenlage seine Light-Off-Temperatur erreicht hat.

Eine besonders effektive Maßnahme zum Aufheizen eines Katalysators, insbesondere eines Katalysators in einer Unterbodenlage eines Kraftfahrzeuges, ist ein Abgasbrenner, da mit einem solchen Abgasbrenner hohe Heizleistungen dargestellt werden können. Damit ein solcher Abgasbrenner emissionsoptimal betrieben werden kann und auch die Anforderungen an eine On-Board-Diagnose erfüllt, sind Maßnahmen zur Steuerung oder Regelung des Abgasbrenners notwendig.

Aus der DE 195 08 013 C1 ist eine Abgasanlage für einen Verbrennungsmotor mit einem Drei-Wege-Katalysator und einem Abgasbrenner bekannt, wobei stromabwärts eines Auslasses des Verbrennungsmotors und stromaufwärts der Einleitstelle des Abgasbrenners eine Lambdasonde angeordnet ist, um das Verbrennungsluftverhältnis des Verbrennungsmotors zu regeln.

Aus der DE 10 2017 113 366 A1 ist ein Abgasnachbehandlungssystem für einen fremdgezündeten Verbrennungsmotor bekannt. Der Verbrennungsmotor ist auslassseitig mit einer Abgasanlage verbunden, wobei in der Abgasanlage in Strömungsrichtung eines Abgases durch die Abgasanlage ein elektrisch beheizbarer Drei-Wege-Katalysator, stromabwärts des elektrisch beheizbaren Drei-Wege-Katalysators ein Vier-Wege-Katalysator und stromabwärts des Vier-Wege-Katalysators ein weiterer Drei-Wege-Katalysator angeordnet sind. Vor einem Start des Verbrennungsmotors werden der elektrisch beheizbare Drei-Wege-Katalysator und vorzugsweise auch der Vier-Wege-Katalysator beheizt, um bereits ab dem Start des Verbrennungsmotors eine effiziente Abgasnachbehandlung der Rohemissionen des Verbrennungsmotors zu ermöglichen. Das Abgasnachbehandlungssystem ist ferner dazu eingerichtet, auch während einer Regeneration des Vier-Wege-Katalysators eine effiziente Umsetzung der Schadstoffe zu ermöglichen und somit in allen Betriebszuständen des Kraftfahrzeuges besonders niedrige Emissionen zu gewährleisten.

Die DE 10 2017 118 215 A1 offenbart ein Abgasnachbehandlungssystem für einen Verbrennungsmotor, insbesondere für einen mittels eines Abgasturboladers aufgeladenen und mittels Zündkerzen fremdgezündeten Verbrennungsmotor. Dabei sind in einer mit einem Auslass des Verbrennungsmotors verbundenen Abgasanlage in motornaher Position ein Partikelfilter und stromabwärts des Partikelfilters ein erster Drei-Wege-Katalysator angeordnet. In Unterbodenlage des Kraftfahrzeuges ist stromabwärts des ersten Drei-Wege-Katalysators ein weiterer Drei-Wege-Katalysator angeordnet. Dabei ist vorgesehen, dass ab einem Motorstart ein Abgasbrenner aktiv ist, mit welchem stromabwärts des Partikelfilters heißes Abgas in die Abgasanlage eingeleitet wird, um zumindest eine der Drei-Wege-Katalysatoren nach dem Kaltstart möglichst schnell auf eine Light-Off-Temperatur aufzuheizen und somit eine effiziente Abgasnachbehandlung zu ermöglichen.

Die DE 10 2018 100 240 A1 beschreibt ein Abgasnachbehandlungssystem für einen Verbrennungsmotor. Dabei ist in einer Abgasanlage des Verbrennungsmotors in motornaher Position ein erster Drei-Wege-Katalysator und in einer Unterbodenposition stromabwärts des motornahen Drei-Wege-Katalysators ein Vier-Wege-Katalysator angeordnet. An der Abgasanlage ist ein Abgasbrenner angeordnet, mit welchem stromabwärts des ersten Drei-Wege-Katalysators heißes Abgas in die Abgasanlage eingeleitet werden kann, um den Vier-Wege-Katalysator aufzuheizen.

Aus der DE 10 2012 021 573 A1 ist ein Verfahren zur Steuerung eines mit Luft und Kraftstoff betriebenen Abgasbrenners bekannt, dessen Brennerabgas mit dem verbrennungsmotorischen Abgas eines Verbrennungsmotors zusammengeführt wird, um einen Katalysator in der Abgasanlage des Verbrennungsmotors aufzuheizen. Dabei ist vorgesehen, dass der Sauerstoffgehalt des Mischabgases von Verbrennungsmotor und Abgasbrenner gemessen wird und die dem Abgasbrenner zugeführte Kraftstoffmenge derart geregelt wird, dass sich die Ist-Sauerstoffkonzentration in der Abgasanlage einer Soll-Sauerstoffkonzentration annähert.

DE 10 2008 032 601 A1 offenbart ein Verfahren zur Regelung eines Verbrennungsluftverhältnisses eines Abgasbrenners in der Abgasanlage eines Verbrennungsmotors, wobei der Abgasbrenner mit einem unterstöchiometrischen Verbrennungsluftverhältnis betrieben wird.

Aus der WO 2019 / 030 315 A1 ist ein Abgasnachbehandlungssystem für einen Verbrennungsmotor bekannt. Dabei sind einer Abgasanlage des Verbrennungsmotors ein motornaher Partikelfilter und stromabwärts des motornahen Partikelfilters zwei sequenziell durchströmte Drei-Wege-Katalysatoren angeordnet. Ferner ist an der Abgasanlage ein Abgasbrenner vorgesehen, mit welchem stromabwärts des motornahen Partikelfilters und stromaufwärts zumindest eines der Drei-Wege-Katalysatoren heißes Abgas in die Abgasanlage eingeleitet wird.

Nachteilig an dem aus dem Stand der Technik bekannten Abgasnachbehandlungssystem ist jedoch, dass das Verbrennungsluftverhältnis des Abgasbrenners vorgesteuert wird und somit die Rohemissionen des Abgasbrenners vergleichsweise hoch ausfallen können.

Der Erfindung liegt nun die Aufgabe zugrunde, die Abgasemissionen eines Abgasbrenners während der Heizphase des Katalysators zu minimieren und ein möglichst schnelles und emissionsarmes Aufheizen des Katalysators zu ermöglichen.

Erfindungsgemäß wird diese Aufgabe durch ein Verfahren zum Aufheizen eines Katalysators in einer Abgasanlage eines Verbrennungsmotors gelöst. Dabei sind in der Abgasanlage in Strömungsrichtung eines Abgases des Verbrennungsmotors ein Abgasbrenner zum Beheizen eines Katalysators und stromabwärts des Abgasbrenners ein Katalysator mit einem Sauerstoffspeicher angeordnet. Stromabwärts eines Auslasses des Verbrennungsmotors und stromaufwärts des Abgasbrenners ist eine erste Lambdasonde zur Steuerung des Verbrennungsluftverhältnisses des Verbrennungsmotors angeordnet. Unmittelbar stromabwärts des Abgasbrenners und stromaufwärts des Katalysators ist eine zweite Lambdasonde zur Steuerung des Verbrennungsluftverhältnis des Abgasbrenners angeordnet. Das Verfahren umfasst folgende Schritte:
- Betreiben der Verbrennungsmotors mit einem stöchiometrischen Verbrennungsluftverhältnis,
- Aktivieren des Abgasbrenners, wobei der Abgasbrenner alternierend mit einem unterstöchiometrischen Verbrennungsluftverhältnis (λ_{B}<1) und einem überstöchiometrischen Verbrennungsluftverhältnis (X_{B}>1) betrieben wird, wobei
- von dem unterstöchiometrischen Verbrennungsluftverhältnis (λ_{B}<1) auf das überstöchiometrische Verbrennungsluftverhältnis (X_{B}>1) umgeschaltet wird, sobald durch die zweite Lambdasonde ein Fettdurchbruch erkannt wird, und wobei
- von dem überstöchiometrischen Verbrennungsluftverhältnis (X_{B}>1) auf das unterstöchiometrische Verbrennungsluftverhältnis (λ_{B}<1) umgeschaltet wird, sobald ein Magerdurchbruch durch die zweite Lambdasonde erkannt wird.

Durch das erfindungsgemäße Verfahren ist eine Regelung des Abgasbrenners möglich, welche ein schnelles Aufheizen des Katalysators ermöglicht und zusätzlich zu dem direkten Wärmeeintrag durch den Abgasbrenner ein katalytisches Beheizen des Katalysators ermöglicht, wodurch ein besonders schnelles Aufheizen des Katalysators möglich ist. Unter einer Anordnung der Lambdasonde unmittelbar stromabwärts des Abgasbrenners ist in diesem Zusammenhang zu verstehen, dass keine katalytisch wirksame Komponente, insbesondere keine Abgasnachbehandlungskomponente mit einer Sauerstoffspeicherfähigkeit zwischen der Einleitstelle des Abgasbrenners in den Abgaskanal und der Lambdasonde angeordnet ist. Somit ergibt sich ein besonders schnelles Regelverhalten, da Totzeitglieder vermieden werden.

Durch die in den abhängigen Ansprüchen aufgeführten Merkmale sind vorteilhafte Verbesserungen und nicht-triviale Weiterentwicklungen des im unabhängigen Anspruch angegebenen Verfahrens zum Aufheizen eines Katalysators in einer Abgasanlage eines Verbrennungsmotors möglich.

In bevorzugter Ausgestaltung der Erfindung ist vorgesehen, dass stromabwärts des Katalysators eine dritte Lambdasonde angeordnet ist, wobei stromabwärts des Katalysators ein stöchiometrisches Abgas eingestellt wird. Dadurch kann verhindert werden, dass es durch einen unterstöchiometrischen oder überstöchiometrischen Betrieb des Abgasbrenners zu Emissionsdurchbrüchen durch den Katalysator kommt, wodurch geringe Endrohremissionen in der Heizphase sichergestellt werden können.

Alternativ oder zusätzlich ist mit Vorteil vorgesehen, dass das Verbrennungsluftverhältnis des Abgasbrenners durch eine Anpassung der Kraftstoffmenge des Abgasbrenners oder durch eine Anpassung der Kraftstoffmenge und der Luftmenge eingestellt wird. Durch eine Anpassung der Kraftstoffmenge kann die Regelgeschwindigkeit erhöht werden. Somit ist ein besonders schneller Wechsel zwischen einem unterstöchiometrischen Verbrennungsluftverhältnis und einem überstöchiometrischen Verbrennungsluftverhältnis möglich.

In einer bevorzugten Ausführungsform des Verfahrens ist vorgesehen, dass das Verbrennungsluftverhältnis des Abgasbrenners durch eine Anpassung der Luftmenge des Abgasbrenners eingestellt wird. Durch eine Anpassung der Luftmenge bei konstanter Kraftstoffmenge ist eine einfache Vorsteuerung und Regelung des Verbrennungsluftverhältnisses des Abgasbrenners möglich.

In einer vorteilhaften Ausgestaltung des Verfahrens ist vorgesehen, dass das überstöchiometrische Verbrennungsluftverhältnis im Bereich 1,02 < λ_{B} <1,1 eingestellt wird. Durch ein leicht überstöchiometrisches Verbrennungsluftverhältnis kann sichergestellt werden, dass es während des überstöchiometrischen Betriebs des Abgasbrenners nicht zu Sauerstoffdurchbrüchen durch den Katalysator kommt. Dabei ist der Abstand des überstöchiometrischen Verbrennungsluftverhältnisses so weit von einem stöchiometrischen Verbrennungsluftverhältnis gewählt, dass das überstöchiometrische Verbrennungsluftverhältnis durch eine Sprungsonde erkannt wird.

In einer weiteren vorteilhaften Ausgestaltung des Verfahrens ist vorgesehen, dass das unterstöchiometrische Verbrennungsluftverhältnis im Bereich 0,9 < λ_{B} <0,98 eingestellt wird. Durch ein leicht unterstöchiometrisches Verbrennungsluftverhältnis kann sichergestellt werden, dass der Abgasbrenner nur geringe Rußemissionen aufweist. Ferner kann sichergestellt werden, dass der unverbrannte Kraftstoff mit dem im Katalysator eingespeicherten Sauerstoff exotherm umgesetzt werden kann. Somit kann ein katalytisches Beheizen des Katalysators initiiert werden. Ferner werden durch das leicht unterstöchiometrische Verbrennungsluftverhältnis Durchbrüche an unverbrannten Kohlenwasserstoffen verhindert, wodurch die Endrohremissionen in der Heizphase minimiert werden können. Dabei ist der Abstand des unterstöchiometrischen Verbrennungsluftverhältnisses so weit von einem stöchiometrischen Verbrennungsluftverhältnis gewählt, dass das unterstöchiometrische Verbrennungsluftverhältnis durch eine Sprungsonde erkannt wird.

Erfindungsgemäß ist vorgesehen, dass die Frequenz des alternierenden Wechsels zwischen dem unterstöchiometrischen Verbrennungsluftverhältnis und dem überstöchiometrischen Verbrennungsluftverhältnis größer als ein Hertz ist. Durch ein schnelles Umschalten mit einer Frequenz von mehr als einem Hertz, also mindestens einem Umschaltvorgang pro Sekunde zwischen dem unterstöchiometrischen Verbrennungsluftverhältnis des Abgasbrenners und dem überstöchiometrischen Verbrennungsluftverhältnis, kann sichergestellt werden, dass der Sauerstoffspeicher des Katalysators hinreichend viel Sauerstoff aufweist, um die unverbrannten Kohlenwasserstoffe exotherm umzusetzen.

Besonders bevorzugt ist es, wenn das Verfahren zum Aufheizen eines Katalysators unmittelbar nach einem Kaltstart des Verbrennungsmotors eingeleitet wird. Unmittelbar nach einem Kaltstart wird eine hohe Heizleistung benötigt, um den Katalysator möglichst schnell auf seine Light-Off-Temperatur aufzuheizen, um eine Konvertierung der limitierten Abgaskomponenten in unlimitierte Abgaskomponenten zu ermöglichen.

Erfindungsgemäß wird ein Abgasnachbehandlungssystem für einen Verbrennungsmotor mit mindestens einem Brennraum vorgeschlagen, wobei das Abgasnachbehandlungssystem eine Abgasanlage umfasst, in welcher in Strömungsrichtung eines Abgases des Verbrennungsmotors ein Abgasbrenner zum Beheizen eines Katalysators und stromabwärts des Abgasbrenners ein Katalysator mit einem Sauerstoffspeicher angeordnet ist. Dabei ist unmittelbar stromabwärts des Abgasbrenners eine erste Lambdasonde angeordnet, mit welcher ein Verbrennungsluftverhältnis des Abgasbrenners regelbar ist. Das Abgasnachbehandlungssystem umfasst ferner ein Steuergerät, welches dazu eingerichtet ist, ein erfindungsgemäßes Verfahren durchzuführen, wenn ein maschinenlesbarer Programmcode durch das Steuergerät ausgeführt wird. Durch ein solches Abgasnachbehandlungssystem ist ein schnelles Aufheizen des Katalysators, insbesondere nach einem Kaltstart des Verbrennungsmotors, möglich. Dabei kann durch die Lambdasonde eine schnelle und genaue Regelung des Verbrennungsluftverhältnisses des Abgasbrenners erfolgen, da sich keine Todzeitglieder zwischen der Einleitstelle für die heißen Gase des Abgasbrenners und der Lambdasonde befinden.

In einer bevorzugten Ausführungsform des Abgasnachbehandlungssystems ist vorgesehen, dass der Katalysator als Drei-Wege-Katalysator ausgeführt ist. Insbesondere bei einem Drei-Wege-Katalysator kann das Aufheizen durch ein erfindungsgemäßes Verfahren beschleunigt werden, da der Abgasbrenner in diesem Bereich geringe Rohemissionen aufweist und ab Erreichen der Light-Off-Temperatur zusätzlich ein katalytisches Heizen stattfindet. Somit kann ein emissionsoptimaler Temperaturbereich des Drei-Wege-Katalysators schnell erreicht werden.

Alternativ ist mit Vorteil vorgesehen, dass der Katalysator als Vier-Wege-Katalysator ausgeführt ist. Unter einem Vier-Wege-Katalysator ist in diesem Zusammenhang ein Partikelfilter mit einer drei-Wege-katalytisch wirksamen Beschichtung zu verstehen. Dabei kann durch den Abgasbrenner neben dem Beheizen in der Kaltstartphase auch eine Regeneration des Vier-Wege-Katalysators unterstützt werden, da insbesondere in einer Unterbodenposition eines Kraftfahrzeuges nicht in allen Betriebszuständen mit motorischen Heizmaßnahmen Temperaturen erreicht werden können, bei denen eine schnelle und effiziente Oxidation des im Vier-Wege-Katalysators zurückgehaltenen Rußes möglich ist.

In einer bevorzugten Ausführungsform der Erfindung ist vorgesehen, dass der Katalysator in einer Unterbodenlage eines Kraftfahrzeuges angeordnet ist. Da ein Katalysator in Unterbodenlage aufgrund des längeren Abgaslaufwegs und der Wärmeverluste über die Wände des Abgaskanal längere Zeit benötigt, um auf seine Light-Off-Temperatur aufgeheizt zu werden, ist es insbesondere vorteilhaft, einen solchen Katalysator in Unterbodenlage mittels eines Abgasbrenners zu beheizen, um möglichst schnell nach einem Kaltstart des Verbrennungsmotors eine effiziente Konvertierung der im Abgasstrom enthaltenen Schadstoffe durch einen solchen Katalysator in Unterbodenlage zu ermöglichen, insbesondere dann, wenn die Verwendung eines Abgasbrenners bei einem motornahen Katalysator aus Gründen des Bauraums, der Lambdaregelung oder unzureichender Mischstrecken nicht möglich ist.

Gemäß einer weiteren bevorzugten Ausführungsform der Erfindung ist vorgesehen, dass der Katalysator in einer motornahen Position, insbesondere als in Strömungsrichtung eines Abgases des Verbrennungsmotors durch die Abgasanlage erste emissionsmindernde Abgasnachbehandlungskomponente, angeordnet ist. Unter einer motornahen Position ist in diesem Zusammenhang eine Position mit einer Abgaslauflänge von weniger als 80 cm, vorzugsweise von weniger als 50 cm ab einem Auslass des Verbrennungsmotors zu verstehen. Insbesondere ist der Katalysator unmittelbar stromabwärts einer Turbine eines Abgasturboladers als erste emissionsmindernde Abgasnachbehandlungskomponente angeordnet. Somit können die Wärmeverluste des Abgases des Verbrennungsmotors bis zum Katalysator verringert werden, wodurch die Abgasanlage stromaufwärts des Katalysators in vergleichsweise kurzer Zeit aufgeheizt werden kann. Durch den Abgasstrom des Verbrennungsmotors kann der Katalysator dann auf einer Temperatur oberhalb der Light-Off-Temperatur gehalten werden, sodass nach dem initialen Aufheizen durch den Abgasbrenner keine weiteren Heizvorgänge mehr notwendig sind beziehungsweise diese Heizvorgänge verkürzt werden können.

Alternativ ist mit Vorteil vorgesehen, dass der Katalysator in einer motorfernen Position, insbesondere in einer Unterbodenlage eines Kraftfahrzeuges, angeordnet ist. Durch das erfindungsgemäße Verfahren können auch großvolumige Katalysatoren in einer Unterbodenlage eines Kraftfahrzeuges unmittelbar nach einem Kaltstart des Verbrennungsmotors auf ihre Light-Off-Temperatur aufgeheizt werden. Dabei ist die thermische Belastung an dieser Position der Abgasanlage bei einem Hochlastbetrieb oder Volllastbetrieb des Verbrennungsmotors geringer, sodass die katalytisch wirksame Oberfläche geringeren Spitzentemperaturen ausgesetzt ist und somit langsamer altert als in einer motornahen Position.

In einer vorteilhaften Ausführungsform des Abgasnachbehandlungssystems ist vorgesehen, dass die zweite Lambdasonde als Sprungsonde ausgeführt ist. Unter einer Sprungsonde ist eine Lambdasonde zu verstehen, deren Spannung im Bereich eines stöchiometrischen Verbrennungsluftverhältnisses (λ = 1) einer sprunghaften Änderung unterliegt. Dadurch kann ein unterstöchiometrisches Abgas einfach und kostengünstig von einem überstöchiometrischen Abgas unterschieden werden.

Alternativ ist mit Vorteil vorgesehen, dass die zweite Lambdasonde als Breitbandsonde ausgeführt ist. Eine Breitbandsonde ist zwar teurer als eine Sprungsonde, weist jedoch auch im Bereich von 0,98 <λ <1,02 eine hinreichende Messgenauigkeit auf, sodass das unterstöchiometrische Verbrennungsluftverhältnis und das überstöchiometrische Verbrennungsluftverhältnisses näher an einem stöchiometrischen Verbrennungsluftverhältnis gewählt werden können.

Gemäß einer vorteilhaften Ausführungsform des Abgasnachbehandlungssystems ist vorgesehen, dass stromabwärts des Katalysators ein weiterer Katalysator angeordnet ist, wobei stromabwärts des Katalysators und stromaufwärts des weiteren Katalysators eine zweite Lambdasonde angeordnet ist, wobei die weitere Lambdasonde zur Regelung des Verbrennungsluftverhältnis des Verbrennungsmotors eingerichtet ist. Dadurch kann sichergestellt werden, dass es während des alternierenden Wechsels zwischen dem unterstöchiometrischen Verbrennungsluftverhältnis und dem überstöchiometrischen Verbrennungsluftverhältnis des Abgasbrenners nicht zu einem Fett- oder Magerdurchbruch durch den Katalysator kommt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit den gleichen Bezugszeichen versehen. Es zeigen:
- Figur 1: ein bevorzugtes Ausführungsbeispiel eines Verbrennungsmotors mit einem Abgasnachbehandlungssystem;
- Figur 2: ein weiteres Ausführungsbeispiel eines Verbrennungsmotors mit einem Abgasnachbehandlungssystem zur Durchführung eines erfindungsgemäßen Verfahrens zum Aufheizen eines Katalysators;
- Figur 3: zeitliche Verläufe verschiedener Parameter während der Durchführung eines erfindungsgemäßen Verfahrens zum Aufheizen eines Katalysators in der Abgasanlage eines Verbrennungsmotors; und
- Figur 4: ein weiteres Ausführungsbeispiel eines Verbrennungsmotors mit einem Abgasnachbehandlungssystem zur Durchführung eines erfindungsgemäßen Verfahrens zum Aufheizen eines Katalysators.

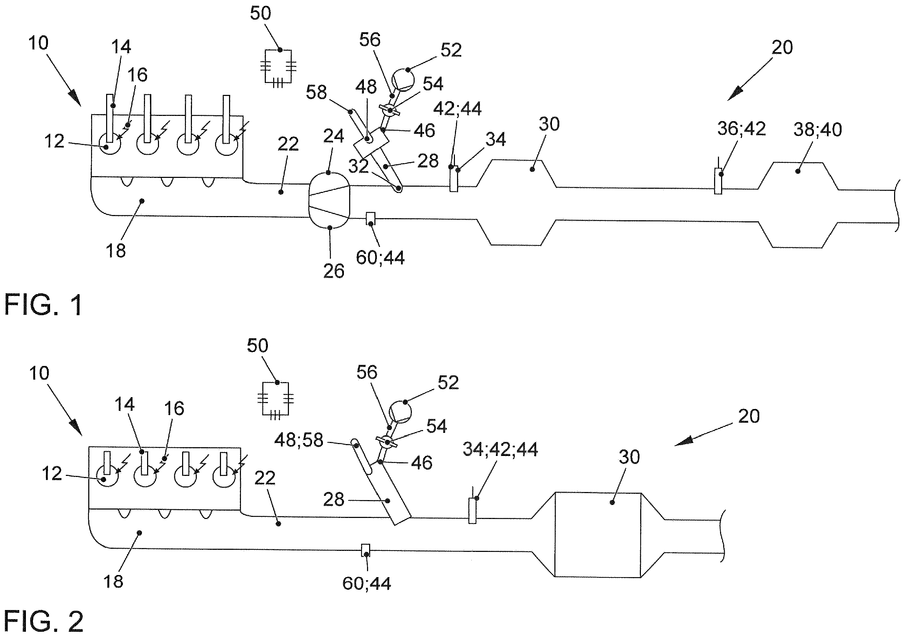

Figur 1 zeigt eine schematische Darstellung eines Verbrennungsmotors 10, dessen Auslass 18 mit einer Abgasanlage 20 eines erfindungsgemäßen Abgasnachbehandlungssystems zur Abgasnachbehandlung eines Abgasstroms des Verbrennungsmotors 10 verbunden ist. Der Verbrennungsmotor 10 ist als Ottomotor ausgeführt, welcher mittels externen Zündmitteln, insbesondere mittels Zündkerzen 16, fremdgezündet wird. Der Verbrennungsmotor 10 weist mehrere Brennräume 12 auf, in welchen ein Kraftstoff-Luft-Gemisch verbrannt wird. Dazu ist an den Brennräumen 12 jeweils ein Kraftstoffinjektor 14 vorgesehen, um einen Kraftstoff in die Brennräume 12 einzuspritzen. Der Verbrennungsmotor 10 ist vorzugsweise als mittels eines Abgasturboladers 24 aufgeladener Verbrennungsmotor 10 ausgeführt, wobei eine Turbine 26 des Abgasturboladers 24 stromabwärts des Auslasses 18 und stromaufwärts eines motornahen Drei-Wege-Katalysators 30 angeordnet ist. Die Abgasanlage 20 umfasst einen Abgaskanal 22, in dem in Strömungsrichtung eines Abgases durch den Abgaskanal 22 stromabwärts des motornahen Drei-Wege-Katalysators 30 in einer Unterbodenlage eines Kraftfahrzeuges ein zweiter Katalysator 38, 40 angeordnet ist. Der zweite Katalysator 38, 40 ist vorzugsweise als Vier-Wege-Katalysator 40 ausgeführt und vereint eine drei-Wege-katalytische Funktion mit einer Partikelminderungsfunktion. Alternativ kann der zweite Katalysator 38, 40 auch als ein weiterer Drei-Wege-Katalysator 38 ausgeführt sein.

Stromabwärts der Turbine 26 des Abgasturboladers 24 und stromaufwärts des motornahen Drei-Wege-Katalysators 30 ist eine Einleitstelle 32 für einen Abgasbrenner 28 vorgesehen, an welcher ein heißes Brennerabgas des Abgasbrenners 28 zum Aufheizen des Drei-Wege-Katalysators 30 in den Abgaskanal 22 eingeleitet werden kann. Stromabwärts des Auslasses 18 des Verbrennungsmotors und stromaufwärts der Einleitstelle 32, insbesondere stromabwärts der Turbine 26 des Abgasturboladers 24 und stromaufwärts der Einleitstelle 32, ist eine erste Lambdasonde 60 zur Steuerung des Verbrennungsluftverhältnisses des Verbrennungsmotors 10 angeordnet. Die erste Lambdasonde 60 ist vorzugsweise als Breitbandsonde 44 ausgeführt. Stromabwärts der Einleitstelle 32 und stromaufwärts des Drei-Wege-Katalysators 30 ist eine zweite Lambdasonde 34, insbesondere eine Sprungsonde 42 angeordnet, um das Verbrennungsluftverhältnis λ_{B} des Abgasbrenners 28 zu regeln. Stromabwärts des Drei-Wege-Katalysators 30 und stromaufwärts des zweiten Katalysators 38, 40 ist eine dritte Lambdasonde 36 angeordnet, welche als Sprungsonde 42 oder als Breitbandsonde 44 ausgeführt sein kann. Alternativ kann auch die zweite Lambdasonde 34 als Breitbandsonde 44 ausgeführt sein.

Der Abgasbrenner 28 weist eine Sekundärluftversorgung 46 und eine Kraftstoffversorgung 48 auf, über welche das Verbrennungsluftverhältnis λ_{B} des Abgasbrenners 28 eingestellt werden kann. Dabei umfasst die Sekundärluftversorgung 46 vorzugsweise eine Sekundärluftpumpe 52 und ein Sekundärluftventil 54, wobei das Sekundärluftventil 54 in einer Sekundärluftleitung 56 angeordnet ist, welche die Sekundärluftpumpe 52 mit dem Abgasbrenner 28 verbindet. Die Kraftstoffversorgung 48 umfasst insbesondere einen Kraftstoffinjektor 58, welcher mit einem Kraftstoffversorgungssystem verbunden ist, welches die Kraftstoffinjektoren 14 des Verbrennungsmotors 10 mit Kraftstoff versorgt. Somit kann der motornahe Drei-Wege-Katalysator 30 mit dem Abgasbrenner 28 aufgeheizt werden.

Der Verbrennungsmotor 10 und der Abgasbrenner 28 sind mit einem Steuergerät 50 verbunden, welches die Kraftstoffeinspritzung durch die Kraftstoffinjektoren 14, 58 an den Brennräumen 12 des Verbrennungsmotors 10 und an der Brennkammer des Abgasbrenners 28 steuert.

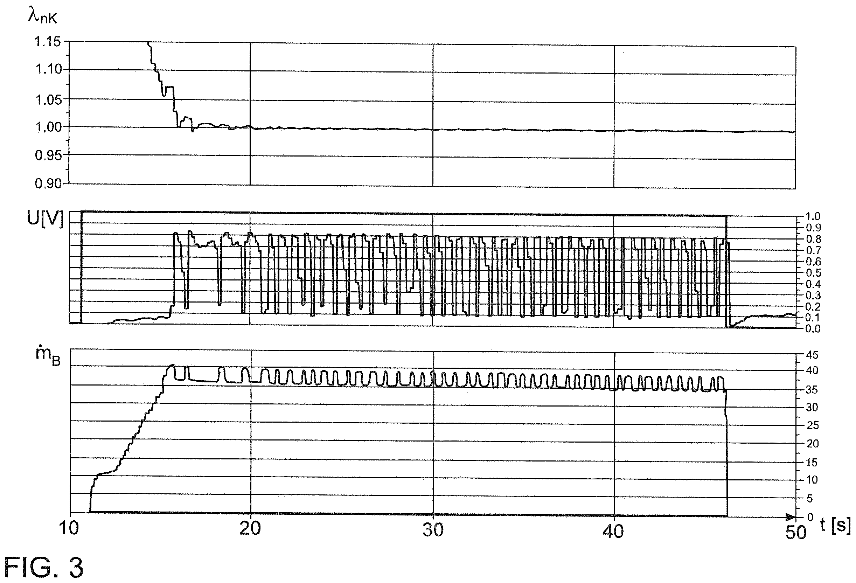

Erfindungsgemäß wird ein Verfahren vorgeschlagen, welches ausgelegt ist, um einen Drei-Wege-Katalysator 30, 38 oder einen Vier-Wege-Katalysator 40 eines Ottomotors möglichst schnell auf die für eine hohe Konvertierungsrate erforderliche Light-Off-Temperatur aufzuheizen. Während dieser aktiven Heizphase wird die Lambdaregelung derart ausgeführt, dass die gasförmigen Emissionen möglichst gering sind, bis die Light-Off-Temperatur erreicht ist. Ein solches Verfahren ist in Figur 3 dargestellt.

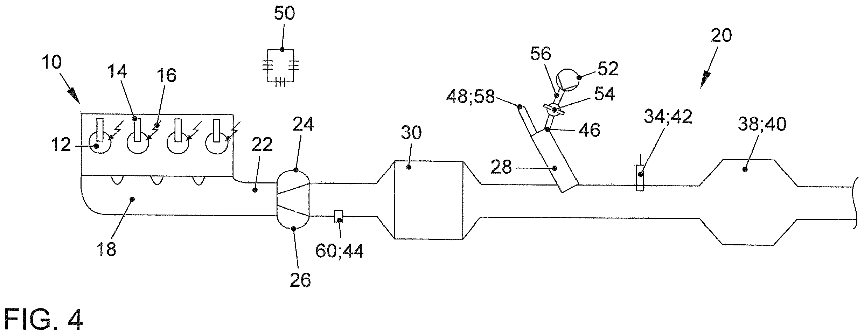

Dabei sind in Figur 3 der zeitliche Verlauf des Abgasluftverhältnisses λ_{nK} stromabwärts des Drei-Wege-Katalysators 30, der zeitliche Verlauf der elektrischen Spannung U an der Sprungsonde 42 und der Kraftstoffmassenstrom *ṁ* des Abgasbrenners 28 bei der Durchführung eines erfindungsgemäßen Verfahrens zum Aufheizen des Katalysators 30 dargestellt. Bezogen auf das Ausführungsbeispiel gemäß Figur 4 zeigt Figur 3 den zeitlichen Verlauf des Abgasluftverhältnisses λ_{nK} stromabwärts des weiteren Katalysators 38, 40.

Um möglichst geringe gasförmige Emissionen in der aktiven Heizphase des Katalysators 30, 38, 40 darzustellen, ist es erforderlich, das Mischlambda aus dem Verbrennungsluftverhältnis λ_{E} des Verbrennungsmotors 10 und dem Verbrennungsluftverhältnis des Abgasbrenners 28 auf ein stöchiometrisches Verhältnis zu regeln. Dazu wird vorzugsweise eine Sprungsonde 42 eingesetzt. Dabei wird das Verbrennungsluftverhältnis λ_{E} des Verbrennungsmotors 10 auf ein stöchiometrisches Verbrennungsluftverhältnis gesteuert. Der Abgasbrenner 28 wird vorgesteuert mit einer Zwangsamplitude beaufschlagt. Stellgröße ist dabei vorzugsweise der Kraftstoff. Dies wird beispielsweise mit einer Überhöhung / Absenkung von einem stöchiometrischen Verbrennungsluftverhältnis mit +/- 5% ausgeführt. Sobald während der Fettphase die zweite Lambdasonde 34 das fette Gemisch aus Motorabgas und Brennerabgas erkennt, wird die Zwangsamplitude auf ~5% mager verstellt. Nach Vermischung des mageren Abgases des Abgasbrenners 28 mit dem des Verbrennungsmotors 10 und der Gaslaufzeit erkennt die Sonde einen Magersprung, die Zwangsamplitude wird wieder umgestellt. Dieses Verfahren wird während der gesamten Heizphase periodisch wiederholt, sodass es einen alternierenden Wechsel zwischen einem unterstöchiometrischen Verbrennungsluftverhältnis λ_{B} < 1 und einem überstöchiometrischen Verbrennungsluftverhältnis λ_{B} > 1 gibt. Durch das Fehlen einer Sauerstoffspeicherfähigkeit zwischen dem Abgasbrenner 28 als Stellglied dieser Regelung und der zweiten Lambdasonde 34, 42 als Messglied sind die Mager- und Fettperioden entsprechend der Gaslaufzeit sehr kurz und damit die Frequenz der Umschaltung hoch. Dadurch bilden sich keine langen Mager- und Fettphasen aus, die zum Beispiel zu erhöhten Partikelemissionen aus dem Abgasbrenner 28 führen könnten.

Somit lässt sich sehr kostengünstig und einfach eine Verbrennungsluftregelung im Zusammenspiel mit dem Abgasbrenner realisieren. Das Verbrennungsluftverhältnis λ_{B} des Abgasbrenners 28 wird über die eingeblasene Sekundärluft und die Ansteuerdauer des Kraftstoffinjektors 58 vorgesteuert.

In Figur 2 ist ein besonders einfaches Ausführungsbeispiel eines Verbrennungsmotors 10 mit einem Abgasnachbehandlungssystem zur Durchführung eines erfindungsgemäßen Verfahrens zum Aufheizen eines Drei-Wege-Katalysators 30 dargestellt. Der Verbrennungsmotor 10 ist als Ottomotor ausgeführt. Der Verbrennungsmotor 10 kann als Saugmotor ausgeführt werden. Stromabwärts eines Auslasses 18 des Verbrennungsmotors 10 und stromaufwärts eines Drei-Wege-Katalysators 30 ist ein Abgasbrenner 28 vorgesehen, mit welchem an einer Einleitstelle 32 stromaufwärts des Drei-Wege-Katalysators 30 heißes Brennerabgas in den Abgaskanal 22 eingeleitet werden kann, um den Drei-Wege-Katalysator 30 aufzuheizen.

In Figur 4 ist ein weiteres, bevorzugtes Ausführungsbeispiel eines Verbrennungsmotors 10 mit einer Abgasanlage 20 dargestellt. Bei im Wesentlichen gleichem Aufbau wie zu Figur 1 ausgeführt, ist in diesem Ausführungsbeispiel die Einleitstelle 32 des Abgasbrenners 28 stromabwärts eines motornahen ersten Drei-Wege-Katalysators 30 und stromaufwärts eines weiteren Drei-Wege-Katalysators 38, 40 ausgebildet. Dabei ist der weitere Katalysator 38, 40 vorzugsweise in einer Unterbodenposition eines Kraftfahrzeuges angeordnet. Um ein schnelles Aufheizen des weiteren Katalysators 38, 40 auf seine Light-Off-Temperatur zu ermöglichen, werden die heißen Abgase des Abgasbrenners 28 an der Einleitstelle 32 in den Abgaskanal 22 eingeleitet, sodass sich der Abgasstrom des Verbrennungsmotors 10 mit den Abgasen des Abgasbrenners 28 vermischt und für eine über den Querschnitt des Abgaskanals 22 gleichmäßige Erwärmung des weiteren Katalysators 38, 40 sorgt.

### Bezugszeichenliste

- 10: Verbrennungsmotor
- 12: Brennraum
- 14: Kraftstoffinjektor
- 16: Zündkerze
- 18: Auslass

- 20: Abgasanlage
- 22: Abgaskanal
- 24: Abgasturbolader
- 26: Turbine
- 28: Abgasbrenner

- 30: Drei-Wege-Katalysator
- 32: Einleitstelle
- 34: zweite Lambdasonde
- 36: dritte Lambdasonde
- 38: zweiter Drei-Wege-Katalysator

- 40: Vier-Wege-Katalysator
- 42: Sprungsonde
- 44: Breitbandsonde
- 46: Sekundärluftversorgung
- 48: Kraftstoffversorgung

- 50: Steuergerät
- 52: Sekundärluftpumpe
- 54: Sekundärluftventil
- 56: Sekundärluftleitung
- 58: Kraftstoffinjektor

- 60: erste Lambdasonde

## Patentansprüche

1. Verfahren zum Aufheizen eines Katalysators (30, 38, 40) in einer Abgasanlage (20) eines Verbrennungsmotors (10) mit mindestens einem Brennraum (12), wobei in der Abgasanlage in Strömungsrichtung eines Abgases des Verbrennungsmotors (10) ein Abgasbrenner (28) zum Beheizen eines Katalysators (30, 38, 40) und stromabwärts des Abgasbrenners (28) ein Katalysator mit einem Sauerstoffspeicher (30, 38, 40) angeordnet sind, wobei stromabwärts eines Auslasses (18) des Verbrennungsmotors (10) und stromaufwärts des Abgasbrenners (28) eine erste Lambdasonde (60) zur Steuerung des Verbrennungsluftverhältnisses des Verbrennungsmotors (10), und wobei unmittelbar stromabwärts des Abgasbrenners (28) und stromaufwärts des Katalysators (30, 38, 40) eine zweite Lambdasonde (34) zur Steuerung des Verbrennungsluftverhältnisses des Abgasbrenners (28) angeordnet ist, umfassend folgende Schritte:
- Betreiben der Verbrennungsmotors (10) mit einem stöchiometrischen Verbrennungsluftverhältnis (X_{E} = 1),
- Aktivieren des Abgasbrenners (28), wobei der Abgasbrenner (28) alternierend mit einem unterstöchiometrischen Verbrennungsluftverhältnis (λ_{B} < 1) und einem überstöchiometrischen Verbrennungsluftverhältnis (λ_{B} > 1) betrieben wird, wobei
- von dem unterstöchiometrischen Verbrennungsluftverhältnis (λ_{B} < 1) auf das überstöchiometrische Verbrennungsluftverhältnis (A_{B} > 1) umgeschaltet wird, sobald durch die zweite Lambdasonde (34) ein Fettdurchbruch erkannt wird, und wobei
- von dem überstöchiometrischen Verbrennungsluftverhältnis (λ_{B} > 1) auf das unterstöchiometrische Verbrennungsluftverhältnis (λ_{B} < 1) umgeschaltet wird, sobald ein Magerdurchbruch durch die zweite Lambdasonde (34) erkannt wird, wobei
- die Amplitude des alternierenden Wechsels zwischen dem unterstöchiometrischen Verbrennungsluftverhältnis und dem überstöchiometrischen Verbrennungsluftverhältnis größer als ein Hertz ist.

2. Verfahren zum Aufheizen eines Katalysators (30, 38, 40) nach Anspruch 1, **dadurch gekennzeichnet, dass** stromabwärts des Katalysators (30, 38, 40) eine dritte Lambdasonde (36) angeordnet ist, mit welcher stromabwärts des Katalysators (30, 38, 40) ein stöchiometrisches Abgas eingestellt wird.

3. Verfahren zum Aufheizen eines Katalysators (30, 38, 40) nach Anspruch 1 oder 2, **dadurch gekennzeichnet, dass** das Verbrennungsluftverhältnis (λ_{B}) des Abgasbrenners (28) durch eine Anpassung der Kraftstoffmenge des Abgasbrenners (28) eingestellt wird.

4. Verfahren zum Aufheizen eines Katalysators (30, 38, 40) nach einem der Ansprüche 1 bis 3, **dadurch gekennzeichnet, dass** das Verbrennungsluftverhältnis (λ_{B}) des Abgasbrenners (28) durch eine Anpassung der Luftmenge des Abgasbrenners (28) oder durch eine Anpassung der Kraftstoffmenge und der Luftmenge eingestellt wird.

5. Verfahren zum Aufheizen eines Katalysators (30, 38, 40) nach einem der Ansprüche 1 bis 4, **dadurch gekennzeichnet, dass** das überstöchiometrische Verbrennungsluftverhältnis im Bereich 1,02 < λ_{B} <1,1 eingestellt wird.

6. Verfahren zum Aufheizen eines Katalysators (30, 38, 40) nach einem der Ansprüche 1 bis 5, **dadurch gekennzeichnet, dass** das unterstöchiometrische Verbrennungsluftverhältnis im Bereich 0,9 < λ_{B} <0,98 eingestellt wird.

7. Verfahren zum Aufheizen eines Katalysators (30, 38, 40) nach einem der Ansprüche 1 bis 6, **dadurch gekennzeichnet, dass** das Verfahren unmittelbar nach einem Kaltstart des Verbrennungsmotors (10) eingeleitet wird.

8. Abgasnachbehandlungssystem für einen Verbrennungsmotor (10) mit mindestens einem Brennraum (12), wobei das Abgasnachbehandlungssystem eine Abgasanlage (20) umfasst, in welcher in Strömungsrichtung eines Abgases des Verbrennungsmotors (10) ein Abgasbrenner (28) zum Beheizen eines Katalysators (30, 38, 40) und stromabwärts des Abgasbrenners (28) ein Katalysator mit einem Sauerstoffspeicher (30, 38, 40) angeordnet sind, wobei stromabwärts eines Auslasses (18) des Verbrennungsmotors (10) und stromaufwärts des Abgasbrenners (28) eine erste Lambdasonde (60) zur Steuerung des Verbrennungsluftverhältnisses des Verbrennungsmotors (10), und wobei unmittelbar stromabwärts des Abgasbrenners (28) eine zweite Lambdasonde (34) angeordnet ist, mit welcher ein Verbrennungsluftverhältnis (λ_{B}) des Abgasbrenners (28) regelbar ist, sowie mit einem Steuergerät (50), welches dazu eingerichtet ist, ein Verfahren nach einem der Ansprüche 1 bis 7 durchzuführen, wenn ein maschinenlesbarer Programmcode durch das Steuergerät (50) ausgeführt wird.

9. Abgasnachbehandlungssystem nach Anspruch 8, **dadurch gekennzeichnet, dass** der Katalysator (30, 38, 40) als Drei-Wege-Katalysator (30) oder als Vier-Wege-Katalysator (40) ausgeführt ist.

10. Abgasnachbehandlungssystem nach einem der Ansprüche 8 oder 9, **dadurch gekennzeichnet, dass** der Katalysator (30, 38, 40) in einer motornahen Position, insbesondere als in Strömungsrichtung eines Abgases des Verbrennungsmotors (10) durch die Abgasanlage erste emissionsmindernde Abgasnachbehandlungskomponente (30, 38, 40) angeordnet ist.

11. Abgasnachbehandlungssystem nach einem der Ansprüche 8 bis 10, **dadurch gekennzeichnet, dass** der Katalysator (30, 38, 40) in einer motorfernen Position, insbesondere in einer Unterbodenlage eines Kraftfahrzeuges, angeordnet ist.

12. Abgasnachbehandlungssystem nach einem der Ansprüche 8 bis 11, **dadurch gekennzeichnet, dass** die zweite Lambdasonde (34) als Sprungsonde (42) ausgeführt ist.

13. Abgasnachbehandlungssystem nach einem der Ansprüche 8 bis 11, **dadurch gekennzeichnet, dass** die zweite Lambdasonde (34) als Breitbandsonde (44) ausgeführt ist.

14. Abgasnachbehandlungssystem nach einem der Ansprüche 8 bis 13, **dadurch gekennzeichnet, dass** stromabwärts des Katalysators (30, 38, 40) ein weiterer Katalysator (38, 40) angeordnet ist, wobei stromabwärts des Katalysators (30, 38, 40) und stromaufwärts des weiteren Katalysators (38, 40) eine dritte Lambdasonde (36) angeordnet ist, wobei die weitere Lambdasonde (36) zur Regelung des Verbrennungsluftverhältnisses (λ_{E}) des Verbrennungsmotors (10) eingerichtet ist.

## Claims

1. Method for heating a catalytic converter (30, 38, 40) in an exhaust-gas system (20) of an internal combustion engine (10) with at least one combustion chamber (12), wherein an exhaust-gas burner (28) for heating a catalytic converter (30, 38, 40) and downstream of the exhaust-gas burner (28) a catalytic converter with an oxygen store (30, 38, 40) are arranged in the exhaust-gas system in the direction of flow of an exhaust gas of the internal combustion engine (10), wherein a first lambda probe (60) for controlling the combustion air ratio of the internal combustion engine (10) is arranged downstream of an outlet (18) of the internal combustion engine (10) and upstream of the exhaust-gas burner (28), and wherein a second lambda probe (34) for controlling the combustion air ratio of the exhaust-gas burner (28) is arranged immediately downstream of the exhaust-gas burner (28) and upstream of the catalytic converter (30, 38, 40), said method comprising the following steps:
- operating the internal combustion engine (10) with a stoichiometric combustion air ratio (λ_{E} = 1),
- activating the exhaust-gas burner (28), wherein the exhaust-gas burner (28) is operated alternately with a sub-stoichiometric combustion air ratio (λ_{B} < 1) and a super-stoichiometric combustion air ratio (λ_{B} > 1), wherein
- a switchover from the sub-stoichiometric combustion air ratio (λ_{B} < 1) to the super-stoichiometric combustion air ratio (λ_{B} > 1) takes place as soon as a rich breakthrough is detected by the second lambda probe (34), and wherein
- a switchover from the super-stoichiometric combustion air ratio (λ_{B} > 1) to the sub-stoichiometric combustion air ratio (λ_{B} < 1) takes place as soon as a lean breakthrough is detected by the second lambda probe (34), wherein
- the amplitude of the alternating change between the sub-stoichiometric combustion air ratio and the super-stoichiometric combustion air ratio is greater than one Hertz.

2. Method for heating a catalytic converter (30, 38, 40) according to Claim 1, **characterized in that** a third lambda probe (36), by which a stoichiometric exhaust gas is set downstream of the catalytic converter (30, 38, 40), is arranged downstream of the catalytic converter (30, 38, 40).

3. Method for heating a catalytic converter (30, 38, 40) according to Claim 1 or 2, **characterized in that** the combustion air ratio (λ_{B}) of the exhaust-gas burner (28) is set by an adjustment of the quantity of fuel in the exhaust-gas burner (28).

4. Method for heating a catalytic converter (30, 38, 40) according to one of Claims 1 to 3, **characterized in that** the combustion air ratio (λ_{B}) of the exhaust-gas burner (28) is set by an adjustment of the quantity of air in the exhaust-gas burner (28) or by an adjustment of the quantity of fuel and the quantity of air.

5. Method for heating a catalytic converter (30, 38, 40) according to one of Claims 1 to 4, **characterized in that** the super-stoichiometric combustion air ratio is set in the range 1.02 < λ_{B} < 1.1.

6. Method for heating a catalytic converter (30, 38, 40) according to one of Claims 1 to 5, **characterized in that** the sub-stoichiometric combustion air ratio is set in the range 0.9 < λ_{B} < 0.98.

7. Method for heating a catalytic converter (30, 38, 40) according to one of Claims 1 to 6, **characterized in that** the method is initiated immediately after a cold start of the internal combustion engine (10).

8. Exhaust-gas aftertreatment system for an internal combustion engine (10) with at least one combustion chamber (12), wherein the exhaust-gas aftertreatment system comprises an exhaust-gas system (20), in which, in the direction of flow of an exhaust gas of the internal combustion engine (10), an exhaust-gas burner (28) for heating a catalytic converter (30, 38, 40) and downstream of the exhaust-gas burner (28)a catalytic converter with an oxygen store (30, 38, 40) are arranged, wherein a first lambda probe (60) for controlling the combustion air ratio of the internal combustion engine (10) is arranged downstream of an outlet (18) of the internal combustion engine (10) and upstream of the exhaust-gas burner (28), and wherein a second lambda probe (34), with which a combustion air ratio (λ_{B}) of the exhaust-gas burner (28) can be controlled in a closed-loop manner, is arranged immediately downstream of the exhaust-gas burner (28), and with a control unit (50), which is configured to carry out a method according to one of Claims 1 to 7 when a machine-readable program code is executed by the control unit (50).

9. Exhaust-gas aftertreatment system according to Claim 8, **characterized in that** the catalytic converter (30, 38, 40) is designed as a three-way catalytic converter (30) or as a four-way catalytic converter (40).

10. Exhaust-gas aftertreatment system according to either of Claims 8 and 9, **characterized in that** the catalytic converter (30, 38, 40) is arranged in a position near the engine, in particular as a first emission-reducing exhaust-gas aftertreatment component (30, 38, 40) in the direction of flow of an exhaust gas of the internal combustion engine (10) through the exhaust-gas system.

11. Exhaust-gas aftertreatment system according to one of Claims 8 to 10, **characterized in that** the catalytic converter (30, 38, 40) is arranged in a position away from the engine, in particular in an underbody position of a motor vehicle.

12. Exhaust-gas aftertreatment system according to one of Claims 8 to 11, **characterized in that** the second lambda probe (34) is designed as a binary sensor (42).

13. Exhaust-gas aftertreatment system according to one of Claims 8 to 11, **characterized in that** the second lambda probe (34) is designed as a wideband sensor (44).

14. Exhaust-gas aftertreatment system according to one of Claims 8 to 13, **characterized in that** a further catalytic converter (38, 40) is arranged downstream of the catalytic converter (30, 38, 40), wherein a third lambda probe (36) is arranged downstream of the catalytic converter (30, 38, 40) and upstream of the further catalytic converter (38, 40), wherein the further lambda probe (36) is set up for closed-loop control of the combustion air ratio (λ_{E}) of the internal combustion engine (10).

## Revendications

1. Procédé de chauffage d'un pot catalytique (30, 38, 40) dans un système de gaz d'échappement (20) d'un moteur à combustion interne (10) comportant au moins une chambre de combustion (12), dans lequel un brûleur de gaz d'échappement (28) destiné à chauffer un pot catalytique (30, 38, 40) et en aval du brûleur de gaz d'échappement (28) un pot catalytique pourvu d'un réservoir d'oxygène (30, 38, 40) sont disposés dans le système de gaz d'échappement dans le sens d'écoulement des gaz d'échappement du moteur à combustion interne (10), une première sonde lambda (60) destinée à commander la proportion d'air de combustion du moteur à combustion interne (10) étant disposée en aval d'une sortie (18) du moteur à combustion interne (10) et en amont du brûleur de gaz d'échappement (28), et une deuxième sonde lambda (34) destinée à commander la proportion d'air de combustion du brûleur de gaz d'échappement (28) étant disposée immédiatement en aval du brûleur de gaz d'échappement (28) et en amont du pot catalytique (30, 38, 40), ledit procédé comprenant les étapes suivantes :
- faire fonctionner le moteur à combustion interne (10) avec une proportion d'air de combustion stœchiométrique (λ_{E} = 1),
- activer le brûleur de gaz d'échappement (28), le brûleur de gaz d'échappement (28) fonctionnant en alternance avec une proportion d'air de combustion sous-stœchiométrique (λ_{B} < 1) et une proportion d'air de combustion sur-stœchiométrique (λ_{B} > 1),
- une commutation de la proportion d'air de combustion sous-stœchiométrique (λ_{B} < 1) à la proportion d'air de combustion sur-stœchiométrique (λ_{B} > 1) étant effectuée dès qu'un passage de matière riche en graisse est détecté par la deuxième sonde lambda (34), et
- une commutation de la proportion d'air de combustion sur-stœchiométrique (λ_{B} > 1) à la proportion d'air de combustion sous-stœchiométrique (λ_{B} < 1) étant effectuée dès qu'un passage de matière pauvre en graisse est détecté par la deuxième sonde lambda (34),
- l'amplitude de l'alternance entre la proportion d'air de combustion sous-stœchiométrique et la proportion d'air de combustion sur-stœchiométrique étant supérieure à un Hertz.

2. Procédé de chauffage d'un pot catalytique (30, 38, 40) selon la revendication 1, **caractérisé en ce qu'**une troisième sonde lambda (36), avec laquelle un gaz d'échappement stœchiométrique est réglé en aval du pot catalytique (30, 38, 40), est disposée en aval du pot catalytique (30, 38, 40).

3. Procédé de chauffage d'un pot catalytique (30, 38, 40) selon la revendication 1 ou 2, **caractérisé en ce que** la proportion d'air de combustion (λ_{B}) du brûleur de gaz d'échappement (28) est réglée par adaptation de la quantité de carburant du brûleur de gaz d'échappement (28) .

4. Procédé de chauffage d'un pot catalytique (30, 38, 40) selon l'une des revendications 1 à 3, **caractérisé en ce que** la proportion d'air de combustion (λ_{B}) du brûleur de gaz d'échappement (28) est réglée par adaptation de la quantité d'air dans le brûleur de gaz d'échappement (28) ou par adaptation de la quantité de carburant et de la quantité d'air.

5. Procédé de chauffage d'un pot catalytique (30, 38, 40) selon l'une des revendications 1 à 4, **caractérisé en ce que** la proportion d'air de combustion surstœchiométrique est réglée dans la gamme 1,02 < λ_{B} < 1,1.

6. Procédé de chauffage d'un pot catalytique (30, 38, 40) selon l'une des revendications 1 à 5, **caractérisé en ce que** la proportion d'air de combustion sousstœchiométrique est réglée dans la gamme 0,9 < λ_{B} < 0,98.

7. Procédé de chauffage d'un pot catalytique (30, 38, 40) selon l'une des revendications 1 à 6, **caractérisé en ce que** le procédé est lancé immédiatement après un démarrage à froid du moteur à combustion interne (10).

8. Système de post-traitement de gaz d'échappement destiné à un moteur à combustion interne (10) comportant au moins une chambre de combustion (12), le système de post-traitement de gaz d'échappement comprenant un système de gaz d'échappement (20) dans lequel un brûleur de gaz d'échappement (28) destiné à chauffer un pot catalytique (30, 38, 40) et, en aval du brûleur de gaz d'échappement (28), un catalyseur pourvu d'un réservoir d'oxygène (30, 38, 40) sont disposés dans le sens d'écoulement des gaz d'échappement du moteur à combustion interne (10), une première sonde lambda (60) destinée à commander la proportion d'air de combustion du moteur à combustion interne (10) étant disposée en aval d'une sortie (18) du moteur à combustion interne (10) et en amont du brûleur de gaz d'échappement (28), et une deuxième sonde lambda (34), avec laquelle une proportion d'air de combustion (λ_{B}) du brûleur de gaz d'échappement (28) peut être régulée, étant disposée immédiatement en aval du brûleur de gaz d'échappement (28), et comportant également une unité de commande (50) qui est conçue pour mettre en œuvre un procédé selon l'une des revendications 1 à 7 lorsqu'un code de programme lisible par machine est exécuté par l'unité de commande (50).

9. Système de post-traitement de gaz d'échappement selon la revendication 8, **caractérisé en ce que** le pot catalytique (30, 38, 40) est conçu comme un pot catalytique à trois voies (30) ou comme un pot catalytique à quatre voies (40).

10. Système de post-traitement de gaz d'échappement selon l'une des revendications 8 ou 9, **caractérisé en ce que** le pot catalytique (30, 38, 40) est disposé dans une position proche du moteur, notamment en tant que premier composant de post-traitement de gaz d'échappement à réduction d'émissions (30, 38, 40) dans le sens d'écoulement des gaz d'échappement du moteur à combustion interne (10) à travers le système de gaz d'échappement.

11. Système de post-traitement de gaz d'échappement selon l'une des revendications 8 à 10, **caractérisé en ce que** le pot catalytique (30, 38, 40) est disposé dans une position éloignée du moteur, notamment dans une position de dessous de caisse d'un véhicule automobile.

12. Système de post-traitement de gaz d'échappement selon l'une des revendications 8 à 11, **caractérisé en ce que** la deuxième sonde lambda (34) est conçue comme une sonde à saut (42).

13. Système de post-traitement de gaz d'échappement selon l'une des revendications 8 à 11, **caractérisé en ce que** la deuxième sonde lambda (34) est conçue comme une sonde à large bande (44).

14. Système de post-traitement de gaz d'échappement selon l'une des revendications 8 à 13, **caractérisé en ce qu'**un autre pot catalytique (38, 40) est disposé en aval du pot catalytique (30, 38, 40), une troisième sonde lambda (36) étant disposée en aval du pot catalytique (30, 38, 40) et en amont de l'autre pot catalytique (38, 40), l'autre sonde lambda (36) étant conçue pour réguler la proportion d'air de combustion (λ_{E}) du moteur à combustion interne (10).
